Europäisches Patentamt

European Patent Office

Office européen des brevets

(11) Publication number: **0 341 763**
**A2**

## (12) EUROPEAN PATENT APPLICATION

(21) Application number: **89200446.6**

(22) Date of filing: **22.02.89**

(51) Int. Cl.⁴: **C13D 3/12 , B01D 37/00**

The title of the invention has been amended (Guidelines for Examination in the EPO, A-III, 7.3).

(30) Priority: **22.02.88 NL 8800446**

(43) Date of publication of application:
**15.11.89 Bulletin 89/46**

(84) Designated Contracting States:
**AT BE DE ES FR GB IT NL SE**

(71) Applicant: **De Vreede, F.G.A., Ir.**
**Schenkeldijk 39**
**NL-3286 LT Klaaswaal(NL)**

(72) Inventor: **De Vreede, F.G.A., Ir.**
**Schenkeldijk 39**
**NL-3286 LT Klaaswaal(NL)**

(54) **Method to filter sugar juice and other viscous liquids.**

(57) Patent is requested for a special designed filtersystem. Elementary in this system are Filtomat selfcleaning filters, specially adapted to be able to function in processindustry and specially in higher viscous liquids than water at high temperatures.

The inventions are the changes made to above mentioned filters, that are on the market for 15 years, so that these filters are suitable to function in viscous sugarjuices (like thickjuice and standard liquor) and other viscous liquids.

The invention is also a filterinstallation with a special designed programm for control so that this installation can function as a selfcontrolling filterstation.

The invention gives a simple economical solution to filter viscous sugarjuice, which is done for over 80 years in the same way.

EP 0 341 763 A2

# Method to filter sugarjuice and other liquids with a viscosity of 2 to 100 cps, with a Filtermat unit.

## Summary

Patent is requested for a special designed filtersystem. Elementary in this system are Filtomat selfcleaning filters, specially adapted to be able to function in processindustry and specially in higher viscous liquids than water at high temperatures.

The inventions are the changes made to above mentioned filters, that are on the market for 15 years, so that these filters are suitable to function in viscous sugarjuices (like thickjuice and standard liquor) and other viscous liquids.

The invention is also a filterinstallation with a special designed programm for control so that this installation can function as a selfcontrolling filterstation.

The invention gives a simple economical solution to filter viscous sugarjuice, which is done for over 80 years in the same way.

## Description

The Filtermat unit consists of parallel linked selfcleaning Filtomat filters.
The unit is calculated according to the nature of the sugarjuice, such as the viscosity, dirt load, temperature and sugar content.
From experience a formular is designed to do this.

Filtration of viscous sugarjuice is done up till now through precoat-filters specially press- and plate- and frame filters.
The disadvantages of these filters are the exact dosing of the precoat to get a homogenous layer on the filtersheet. If the covering is not 100 %, then one will get holes in the layer and contamination in the filtered sugarjuice as well as parts of filteraid.

The necessity of filtering with filteraid was originally to eliminate bacteriological contamination. In the modern way of processing there is no necessity for bacterial filtration anymore because of closed systems, modern materials and new equipment.
Simpler filtersystems without filteraid did fail while the selfcleaning effect did not work completely and ended in blocking of the filter-element.

Specially the gel contamination caused by the beetstructure at the end of the campaigne always caused a blocking of the filtermaterial.
Reason for this gel was the change in beetstructure caused by frost.

The invented methode overcomes these problems.
The selfcleaning Filtomats are technically changed to be able to function in the processindustry.

Originally these filters are designed for waterfiltration and for over 15 years on the market. By adapting internal materials and changing the controlsystem a filterunit is developed, which is able to filter fully automatically viscous sugarjuice and eliminates floating particles according to the absolute value of the woven mesh wire and even 50 % under this mesh wire, depending on cycle-time and "dirt" structure.

The Filtomat filters have, by their concentrated cleaning nozzles and their backflush, a very efficient cleaning, even of the most difficult "dirt".
In contrast with the precoat filters the Filtermat unit is fully automatic selfcleaning.

It is a continuous filtration, even during backwash.
The unit is constructed to function autonomous with signal to a central control room fitting in the modern ways of procesindustry.

The filterunit can be used in the following sugarjuices:
Thinjuice, thickjuice, standard liquor and raw juice.
Also for liquids with a viscosity between 2 and 100 cps.

A way to construct a Filtermat filterunit has been described in detail with the drawings, only figuring this one construction.
Many other ways of construction are possible.

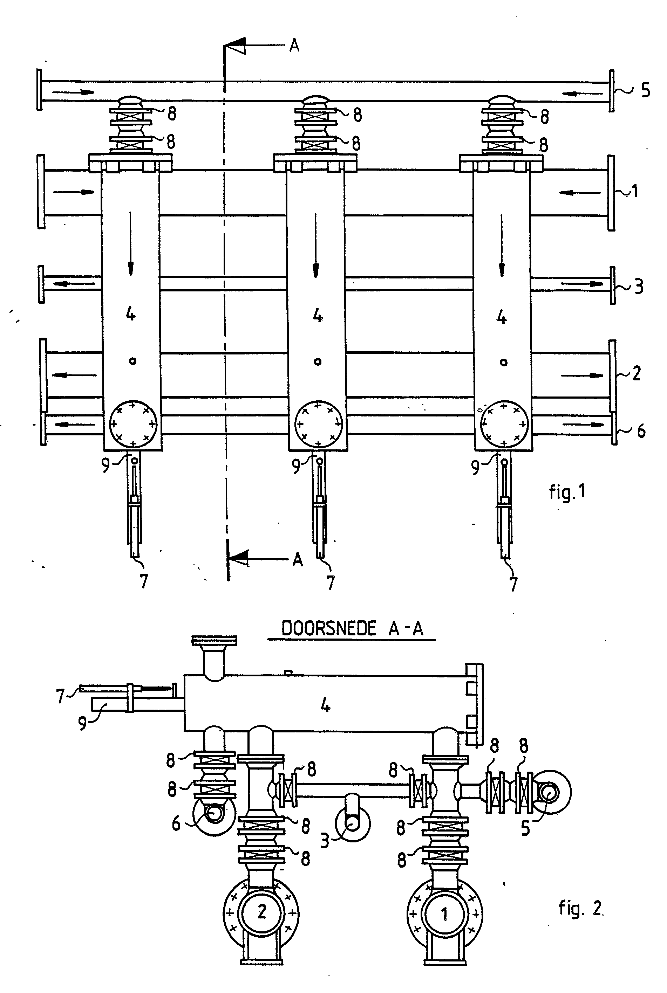

Fig. 1 gives a topview of the battery line-up and fig. 2 gives a side view of the connections and valve positions.

The figures show an in- and outlet pipe on which the Filtomat filters are mounted.
The filters have a combined inlet 1, outlet 2 and drain 3.

There also is an external rinse connection 5 for rinsing with an external fluid; for thick sugarjuice this is thinjuice. The reason for this is economical.

Rinsing is also possible with the filtered liquid. The rinsed juice is flushed through a common drain 6 back to a step before in the process.

The control system is developed to work completely autonomous. There is a special PLC programm designed for this control.

The Filtomat filter, originally controled by water, is changed to electical control, initiated by a differential control system adjusted for the viscosity of the juice.

The valves 8 for rinsing and the piston for the vertical movement of the dirtcollector are steered by pneumatic air.

While the piston needs a very smooth movement to effect a 100 % cleaningcycle and because the pressure on the piston is related to the systempressure, changing in each system, a special piston is developed.

To overcome the slip-stick effect at air compression, the smooth movement is performed by using an oil-brake in the construction.

## Claims

1. Method to filter sugarjuice and other liquids with a viscosity between 2 and 100 cps, with a characteristic that the filtering is performed with a Filtermat filterunit, existing of a quantity of parallel linked selfcleaning Filtomats known from formal patent inquiries.
Being up till now the only successful selfcleaning absolute mesh wire filter, able to filter continuously viscous sugar juices.

2. Method, according to conclusion 1, with the characteristic that the Filtomat filters are rebuilt for application in the Filtermat filterunit and provided with a special controlsystem for the purpose to function autonomous in the processindustry.
The controlsystem consists of a PLC controled electrical steering and a pneumatic air drive.

3. Method, according to conclusion 2, with the characteristic that the Filtomats are equiped with a special designed piston with oilbrake to get a smooth pistonrod movement, which is impossible with pneumatic air.

300446

fig.1

DOORSNEDE A - A

fig. 2

Oorspr